# EUROPEAN PATENT APPLICATION

(11) **EP 4 438 354 A2**
(43) Date of publication of application: **02.10.2024**
(21) Application number: 24151017.1
(22) Date of filing: 09.01.2024
(51) Int. Cl.: B60H 1/00, B60H 1/32

(54) **MULTI-TEMPERATURE AIR CONDITIONING SYSTEM, CONTROL METHOD THEREOF AND TRANSPORT REFRIGERATION VEHICLE**

(30) Priority: 09.01.2023 CN 202310030346
(71) Applicant: Carrier Corporation, Palm Beach Gardens, FL 33418 (US)
(72) Inventor: CHEN, Kun, Shanghai, 201206 (CN); TIAN, Hai, Shanghai, 201206 (CN); TANG, Chengwei, Shanghai, 201206 (CN)
(74) Representative: Dehns

(57) **Abstract**

The present invention provides a multi-temperature air conditioning system (100), a control method thereof and a transport refrigeration vehicle. The multi-temperature air conditioning system comprises: an outdoor unit, in which a compressor (111), a first stop valve (112), an outdoor heat exchanger (113), and a first check valve (114) connected through pipelines are arranged, wherein, the first stop valve is arranged between a first end of the outdoor heat exchanger (113) and an exhaust port (111b) of the compressor (111); a first type indoor unit, in which a first indoor heat exchanger (121), a first throttling element (122) with a shut-off function, a first regulating valve (123), a second stop valve (124), and a second check valve (125) are respectively arranged; and a second type indoor unit, in which a second indoor heat exchanger (131), a second throttling element (132) with a shut-off function, a second regulating valve (133), a third stop valve (134), and a third check valve (135) are respectively arranged. The multi-temperature air conditioning system (100) and the method thereof according to the present invention can achieve zoned cooling and heating at the same time, and improve system reliability.

## Description

The present invention relates to the field of temperature regulation of transport vehicles, and in particular to a multi-temperature air conditioning system, a control method thereof and a transport refrigeration vehicle.

At present, the cold chain transport industry usually uses the refrigeration cycle and the hot gas bypass cycle of the transport refrigeration unit to provide whole zone cooling or heating function for different cargo zones of the transport vehicle. At the same time, when heating and cooling are required separately for different cargo zones, it usually requires the operation of the refrigeration system and electric heating at the same time, which requires extra power consumption in addition to the power consumption of the refrigeration system, thus leading to low-efficient system operation.

Under the backdrop of energy conservation and emission reduction, there is an urgent need to develop and promote a high-efficient and energy-saving multi-temperature air conditioning system, a control method thereof and a transport refrigeration vehicle.

The present invention aims to provide a multi-temperature air conditioning system, a control method thereof and a transport refrigeration vehicle, so as to at least partially solve or alleviate the problems existing in the prior art.

To achieve at least one object of the present invention, according to one aspect of the present invention, a multi-temperature air conditioning system is provided, comprising:
an outdoor unit, in which a compressor, a first stop valve, an outdoor heat exchanger, and a first check valve connected through pipelines are arranged, wherein, the first stop valve is arranged between a first end of the outdoor heat exchanger and an exhaust port of the compressor;
a first type indoor unit, in which a first indoor heat exchanger, a first throttling element with a shut-off function, a first regulating valve, a second stop valve, and a second check valve are respectively arranged, wherein, a first end of the first indoor heat exchanger is connected to a second end of the outdoor heat exchanger through the first throttling element and the first check valve, while the first end of the first indoor heat exchanger is at the same time connected to the exhaust port of the compressor through the second stop valve, and a second end of the first indoor heat exchanger is connected to the suction port of the compressor through the first regulating valve, while the second end of the first indoor heat exchanger is at the same time connected to the second end of the outdoor heat exchanger through the second check valve and the first check valve; and
a second type indoor unit, in which a second indoor heat exchanger, a second throttling element with a shut-off function, a second regulating valve, a third stop valve, and a third check valve are respectively arranged, wherein, a first end of the second indoor heat exchanger is connected to the second end of the outdoor heat exchanger through the second throttling element and the first check valve, while the first end of the second indoor heat exchanger is at the same time connected to the exhaust port of the compressor through the third stop valve, and a second end of the second indoor heat exchanger is connected to the suction port of the compressor through the second regulating valve, while the second end of the second indoor heat exchanger is at the same time connected to the second end of the outdoor heat exchanger through the third check valve and the first check valve.

The first regulating valve and the second regulating valve may be continuously-adjustable regulating valves.

The multi-temperature air conditioning system may comprise a controller that communicates with the first regulating valve, the second regulating valve, the first stop valve, the second stop valve, the third stop valve, the first throttling element, the second throttling element, or any combination thereof.

To achieve at least one object of the present invention, according to one aspect of the present invention, a control method for the aforementioned multi-temperature air conditioning system is provided, comprising:
a zoned cooling and heating mode of turning on the third stop valve and the first regulating valve, turning off the second regulating valve, the first stop valve and the second stop valve, and turning off the second throttling element while allowing the first throttling element to play a throttling role, so that refrigerant flows sequentially through the exhaust port of the compressor, the third stop valve, the second indoor heat exchanger, the third check valve, the first throttling element, the first indoor heat exchanger, the first regulating valve, and the suction port of the compressor; or
turning on the second stop valve and the second regulating valve, turning off the first regulating valve, the first stop valve, and the third stop valve, and turning off the first throttling element while allowing the second throttling element to play a throttling role, so that the refrigerant flows sequentially through the exhaust port of the compressor, the second stop valve, the first indoor heat exchanger, the second check valve, the second throttling element, the second indoor heat exchanger, the second regulating valve, and the suction port of the compressor.

The control method may comprise: a whole zone cooling mode of turning on the first regulating valve, the second regulating valve, and the first stop valve, turning off the second stop valve and the third stop valve, and allowing the first throttling element and the second throttling element to play a throttling role, so that a first part of the refrigerant flows sequentially through the exhaust port of the compressor, the first stop valve, the outdoor heat exchanger, the first check valve, the first throttling element, the first indoor heat exchanger, the first regulating valve, and the suction port of the compressor, while a second part of the refrigerant flows sequentially through the exhaust port of the compressor, the first stop valve, the outdoor heat exchanger, the first check valve, the second throttling element, the second indoor heat exchanger, the second regulating valve, and the suction port of the compressor.

The control method may comprise: a whole zone heating mode of turning on the first regulating valve, the second regulating valve, the second stop valve, and the third stop valve, turning off the first stop valve, the first throttling element, and the second throttling element, and allowing the first part of the refrigerant to flow sequentially through the exhaust port of the compressor, the second stop valve, the first indoor heat exchanger, the first regulating valve, and the suction port of the compressor, while allowing the second part of the refrigerant to flow sequentially through the exhaust port of the compressor, the third stop valve, the second indoor heat exchanger, the second regulating valve, and the suction port of the compressor.

The control method may comprise: a specific zone cooling mode of turning on the first stop valve and the first regulating valve, turning off the second stop valve, the third stop valve, and the second regulating valve, and allowing the first throttling element to play a throttling role while turning off the second throttling element, so that the refrigerant flows sequentially through the exhaust port of the compressor, the first stop valve, the outdoor heat exchanger, the first check valve, the first throttling element, the first indoor heat exchanger, the first regulating valve, and the suction port of the compressor; or
turning on the first stop valve and the second regulating valve, turning off the second stop valve, the third stop valve, and the first regulating valve, and allowing the second throttling element to play a throttling role while turning off the first throttling element, so that the refrigerant flows sequentially through the exhaust port of the compressor, the first stop valve, the outdoor heat exchanger, the first check valve, the second throttling element, the second indoor heat exchanger, the second regulating valve, and the suction port of the compressor.

The control method may comprise: a specific zone heating mode of turning on the second stop valve and the first regulating valve, turning off the first stop valve, the third stop valve, the second regulating valve, the first throttling element and the second throttling element, so that the refrigerant flows sequentially through the exhaust port of the compressor, the second stop valve, the first indoor heat exchanger, the first regulating valve, and the suction port of the compressor; or
turning on the third stop valve and the second regulating valve, turning off the first stop valve, the second stop valve, the first regulating valve, the first throttling element, and the second throttling element, so that the refrigerant flows sequentially through the exhaust port of the compressor, the third stop valve, the second indoor heat exchanger, the second regulating valve, and the suction port of the compressor.

To achieve at least one object of the present application, according to one aspect of the present invention, a multi-temperature air conditioning system is provided, comprising:
an outdoor unit, in which a compressor, a first stop valve, an outdoor heat exchanger, and a first check valve connected through pipelines are arranged, wherein, the first stop valve is arranged between a first end of the outdoor heat exchanger and an exhaust port of the compressor;
a first type indoor unit, in which a first indoor heat exchanger, a first throttling element with a shut-off function, a first three-way valve, and a second stop valve are respectively arranged, wherein, the first three-way valve has a first port for connecting with a second end of the first indoor heat exchanger, a second port for connecting with the suction port of the compressor, and a third port for connecting with the first check valve, where a first end of the first indoor heat exchanger is connected to a second end of the outdoor heat exchanger through the first throttling element and the first check valve, while the first end of the first indoor heat exchanger is at the same time connected to the exhaust port of the compressor through the second stop valve; and
a second type indoor unit, in which a second indoor heat exchanger, a second throttling element with a shut-off function, a second three-way valve, and a third stop valve are respectively arranged, wherein, the second three-way valve has a first port for connecting with a second end of the second indoor heat exchanger, a second port for connecting with the suction port of the compressor, and a third port for connecting with the first check valve, where a first end of the second indoor heat exchanger is connected to the second end of the outdoor heat exchanger through the second throttling element and the first check valve, while the first end of the second indoor heat exchanger is at the same time connected to the exhaust port of the compressor through the third stop valve.

The multi-temperature air conditioning system may comprise a controller that communicates with the first three-way valve, the second three-way valve, the first stop valve, the second stop valve, the third stop valve, the first throttling element, the second throttling element, or any combination thereof.

To achieve at least one object of the present invention, according to one aspect of the present invention, a control method for the aforementioned multi-temperature air conditioning system is provided, comprising:
a zoned cooling and heating mode of turning on the third stop valve, first and second ports of the first three-way valve, and first and third ports of the second three-way valve, turning off the first stop valve, the second stop valve, a third port of the first three-way valve and a second port of the second three-way valve, and turning off the second throttling element while allowing the first throttling element to play a throttling role, so that refrigerant flows sequentially through the exhaust port of the compressor, the third stop valve, the second indoor heat exchanger, the first port of the second three-way valve, the third port of the second three-way valve, the first throttling element, the first indoor heat exchanger, the first port of the first three-way valve, the second port of the first three-way valve, and the suction port of the compressor; or
turning on the second stop valve, first and second ports of the second three-way valve, and first and third ports of the first three-way valve, turning off the first stop valve, the third stop valve, the third port of the second three-way valve, and the second port of the first three-way valve, and turning off the first throttling element while allowing the second throttling element to play a throttling role, so that the refrigerant flows sequentially through the exhaust port of the compressor, the second stop valve, the first indoor heat exchanger, the first port of the first three-way valve, the third port of the first three-way valve, the second throttling element, the second indoor heat exchanger, the first port of the second three-way valve, the second port of the second three-way valve, and the suction port of the compressor.

The control method may comprise: a whole zone cooling mode of turning on the first stop valve, first and second ports of the first three-way valve, and first and second ports of the second three-way valve, turning off the second stop valve, the third stop valve, a third port of the first three-way valve and a third port of the second three-way valve, and allowing the first throttling element and the second throttling element to play a throttling role, so that the first part of the refrigerant flows sequentially through the exhaust port of the compressor, the first stop valve, the outdoor heat exchanger, the first check valve, the first throttling element, the first indoor heat exchanger, the first port of the first three-way valve, the second port of the first three-way valve, and the suction port of the compressor, while the second part of the refrigerant flows sequentially through the exhaust port of the compressor, the first stop valve, the outdoor heat exchanger, the first check valve, the second throttling element, the second indoor heat exchanger, the first port of the second three-way valve, the second port of the second three-way valve, and the suction port of the compressor.

The control method may comprise: a whole zone heating mode of turning on the second stop valve, the third stop valve, first and second ports of the first three-way valve, and first and second ports of the second three-way valve, turning off the first stop valve, the third port of the first three-way valve, the third port of the second three-way valve, the first throttling element, and the second throttling element, so that the first part of the refrigerant flows sequentially through the exhaust port of the compressor, the second stop valve, the first indoor heat exchanger, the first port of the first three-way valve, the second port of the first three-way valve, and the suction port of the compressor, while the second part of the refrigerant flows sequentially through the exhaust port of the compressor, the third stop valve, the second indoor heat exchanger, the first port of the second three-way valve, the second port of the second three-way valve, and the suction port of the compressor.

The control method may comprise: a specific zone cooling mode of turning on the first stop valve, the first and second ports of the first three-way valve, and the first and second ports of the second three-way valve, turning off the second stop valve, the third stop valve, the third port of the first three-way valve, and the third port of the second three-way valve, and allowing the first throttling element to play a throttling role while turning off the second throttling element, so that the refrigerant flows sequentially through the exhaust port of the compressor, the first stop valve, the outdoor heat exchanger, the first check valve, the first throttling element, the first indoor heat exchanger, the first port of the first three-way valve, the second port of the first three-way valve and the suction port of the compressor; or
turning on the first stop valve, the first and second ports of the second three-way valve, and the first and second ports of the first three-way valve, turning off the second stop valve, the third stop valve, the third port of the second three-way valve, and the third port of the first three-way valve, and allowing the second throttling element to play a throttling role while turning off the first throttling element, so that the refrigerant flows sequentially through the exhaust port of the compressor, the first stop valve, the outdoor heat exchanger, the first check valve, the second throttling element, the second indoor heat exchanger, the first port of the second three-way valve, the second port of the second three-way valve, and the suction port of the compressor.

The control method may comprise: a specific zone heating mode of turning on the second stop valve, the first and second ports of the first three-way valve, and the first and third ports of the second three-way valve, turning off the first stop valve, the third stop valve, the third port of the first three-way valve, the second port of the second three-way valve, the first throttling element, and the second throttling element, so that the refrigerant flows sequentially through the exhaust port of the compressor, the second stop valve, the first indoor heat exchanger, the first port of the first three-way valve, the second port of the first three-way valve, and the suction port of the compressor; or
turning on the third stop valve, the first and second ports of the second three-way valve, and the first and third ports of the first three-way valve, turning off the first stop valve, the second stop valve, the third port of the second three-way valve, the second port of the first three-way valve, the first throttling element, and the second throttling element, so that the refrigerant flows sequentially through the exhaust port of the compressor, the third stop valve, the second indoor heat exchanger, the first port of the second three-way valve, the second port of the second three-way valve, and the suction port of the compressor.

To achieve at least one object of the present invention, according to one aspect of the present invention, a transport refrigeration vehicle is provided, comprising: the multi-temperature air conditioning system as mentioned above; a plurality of compartment zones independent of each other; wherein the first type indoor unit or the second type indoor unit is arranged alternatively in each compartment zone.

The multi-temperature air conditioning system according to the present invention, by arranging multiple types of valve devices between the outdoor unit, and the first type indoor unit and the second type indoor unit that are connected with the outdoor unit, achieves the interconnection between the three, making it possible to realize the cooling and heating control of the first type indoor unit and the second type indoor unit in different zones. On this basis, the control method can be achieved by adjusting the flow direction and connection or disconnection of the respective flow paths. In addition, the transport refrigeration vehicle using such multi-temperature air conditioning system can achieve independent temperature regulation in different compartment zones, thereby improving the adaptability and application range of constant temperature storage of the compartments.

With reference to the accompanying drawings, the disclosure of the present invention will become easier to understand. Those skilled in the art would readily appreciate that these drawings are for the purpose of illustration, and are not intended to limit the protection scope of the present invention. In addition, in the figures, similar numerals are used to denote similar components, where:
FIG. 1 shows a structural schematic diagram of a first embodiment of a multi-temperature air conditioning system according to the present invention; and
FIG. 2 shows a structural schematic diagram of a second embodiment of a multi-temperature air conditioning system according to the present invention.

The present invention will be described in detail hereinafter with reference to the exemplary embodiments shown in the accompanying drawings. However, it should be understood that the present invention can be implemented in many different forms, and should not be construed as being limited to the embodiments set forth herein. These embodiments are provided here for the purpose of making the disclosure of the present invention more complete and comprehensive, and fully conveying the concept of the present invention to those skilled in the art.

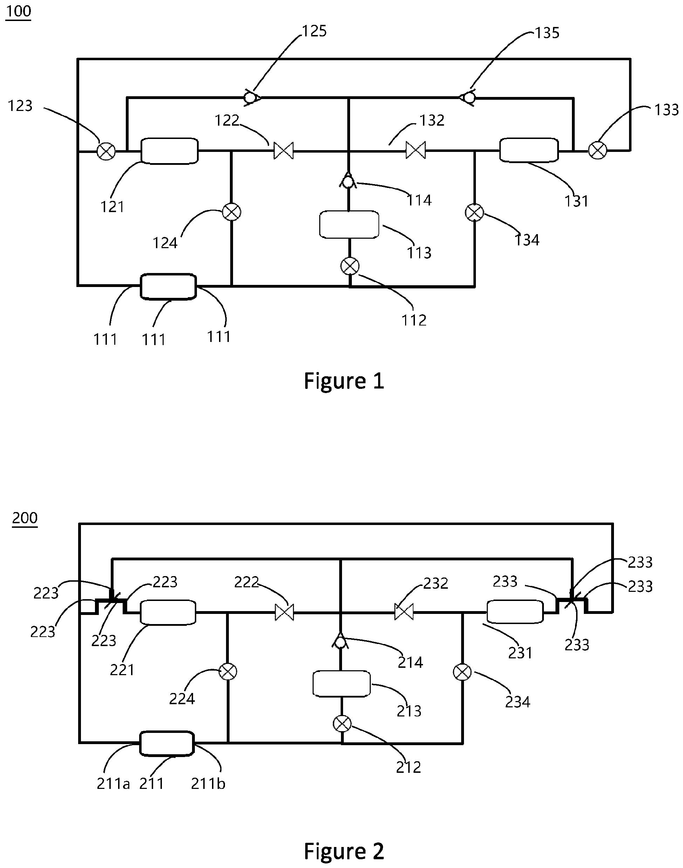

FIG. 1 shows an embodiment of a multi-temperature air conditioning system. The multi-temperature air conditioning system 100 comprises an outdoor unit, a first type indoor unit, and a second type indoor unit. The outdoor unit is connected with the first type indoor unit and the second type indoor unit respectively to form a complete refrigerant flow path. Wherein, the indoor unit and the outdoor unit mentioned herein refer to the temperature regulation zones including the heat exchangers. The indoor unit usually refers to the target section for temperature regulation, while the outdoor unit usually refers to the heat absorption/heat dissipation section for achieving heat balance during temperature regulation. Taking a transport vehicle as an example, the indoor unit mentioned above refers to each compartment zone in the vehicle for storing goods or the cab, while the outdoor unit may refer to the location inside or outside the vehicle where temperature regulation is not required.

Specifically, a compressor 111, a first stop valve 112, an outdoor heat exchanger 113, and a first check valve 114 connected through pipelines are arranged in the outdoor unit. Wherein, the first stop valve 112 is arranged between the first end of the outdoor heat exchanger 113 and the exhaust port 111b of the compressor 111. The first type indoor unit is provided with a first indoor heat exchanger 121, a first throttling element 122 with a shut-off function, a first regulating valve 123, a second stop valve 124, and a second check valve 125, respectively. The first end of the first indoor heat exchanger 121 is connected to the second end of the outdoor heat exchanger 113 through the first throttling element 122 and the first check valve 114, while the first end of the first indoor heat exchanger 121 is at the same time connected to the exhaust port 111b of the compressor 111 through the second stop valve 124, and the second end of the first indoor heat exchanger 121 is connected to the suction port 111a of the compressor 111 through the first regulating valve 123, while the second end of the first indoor heat exchanger 121 is at the same time connected to the second end of the outdoor heat exchanger 113 through the second check valve 125 and the first check valve 114. And, the second type indoor unit is provided with a second indoor heat exchanger 131, a second throttling element 132 with a shut-off function, a second regulating valve 133, a third stop valve 134, and a third check valve 135, respectively. The first end of the second indoor heat exchanger 131 is connected to the second end of the outdoor heat exchanger 113 through the second throttling element 132 and the first check valve 114, while the first end of the second indoor heat exchanger 131 is at the same time connected to the exhaust port 111b of the compressor 111 through the third stop valve 134, and the second end of the second indoor heat exchanger 131 is connected to the suction port 111a of the compressor 111 through the second regulating valve 133, while the second end of the second indoor heat exchanger 131 is at the same time connected to the second end of the outdoor heat exchanger 113 through the third check valve 135 and the first check valve 114.

The multi-temperature air conditioning system under this arrangement, by arranging multiple types of valve devices between the outdoor unit, and the first type indoor unit and the second type indoor unit that are connected with the outdoor unit, achieves the interconnection between the three, making it possible to realize the cooling and heating control of the first type indoor unit and the second type indoor unit in different zones. Although a first type indoor unit and a second type indoor unit are illustrated as examples in the figures, it should be appreciated that they can refer to a kind of indoor units having component configuration with common characteristics. Therefore, the multi-temperature air conditioning system and the control method described below can be applied to the layout scheme having two or more indoor units.

Various possible modifications of the multi-temperature air conditioning system will be described below in conjunction with the accompanying drawings. In addition, in order to further improve system efficiency or reliability, some components can be additionally added, as also exemplified below. For example, the first regulating valve 123 and the second regulating valve 133 are continuously-adjustable regulating valves. For another example, the multi-temperature air conditioning system 100 further comprises a controller (not shown) that communicates with the first regulating valve 123, the second regulating valve 133, the first stop valve 112, the second stop valve 124, the third stop valve 134, the first throttling element 122, the second throttling element 132, or any combination thereof.

The control method for the multi-temperature air conditioning system 100 will be described below in conjunction with FIG. 1.

When the multi-temperature air conditioning system executes the zoned cooling and heating mode, if the cooling mode is executed with the first type indoor unit as the target object, and the heating mode is executed with the second type indoor unit as the target object, the third stop valve 134 and the first regulating valve 123 are turned on, while the second regulating valve 133, the first stop valve 112 and the second stop valve 124 are turned off, and the second throttling element 132 is turned off while allowing the first throttling element 122 to play a throttling role.

At this point, the refrigerant first enters the compressor 111 for gas-phase compression. And then, the refrigerant flows from the exhaust port 111b of the compressor 111 through the third stop valve 134 into the second indoor heat exchanger 131 in the second type indoor unit, thereby providing heating for the second type indoor unit accordingly. The refrigerant then flows through the third check valve 135 and flows into the first indoor heat exchanger 121 in the first type indoor unit through the first throttling element 122, such that it enters the first indoor heat exchanger 121 for evaporation and heat absorption after undergoing throttling expansion in the first throttling element 122, thereby providing cooling for the first type indoor unit. The refrigerant that has completed its work returns to the suction port 111a of the compressor 111 after passing through the first regulating valve 123, thus completing the cycle.

If the heating mode is executed with the first type indoor unit as the target object, and the cooling mode is executed with the second type indoor unit as the target object, the second stop valve 124 and the second regulating valve 133 are turned on, the first regulating valve 123, the first stop valve 112, and the third stop valve 134 are turned off, and the first throttling element 122 is turned off while allowing the second throttling element 132 to play a throttling role.

At this point, the refrigerant first enters the compressor 111 for gas-phase compression. And then, the refrigerant flows from the exhaust port 111b of the compressor 111 through the second stop valve 124 into the first indoor heat exchanger 121 in the first type indoor unit, thereby providing heating for the first type indoor unit accordingly. The refrigerant then flows through the second check valve 125, and flows into the second indoor heat exchanger 131 in the second type indoor unit through the second throttling element 132, such that it enters the second indoor heat exchanger 131 for evaporation and heat absorption after undergoing throttling expansion in the second throttling element 132, thereby providing cooling for the second type indoor unit. The refrigerant that has completed its work returns to the suction port 111a of the compressor 111 after passing through the second regulating valve 133, thus completing the cycle.

It should be appreciated that both the first throttling element 122 and the second throttling element 132 can play the role of throttling expansion. However, it is also possible that one of them can also be completely turned off, while the other can be adjusted by the opening to play the role of throttling expansion.

The control method for the multi-temperature air conditioning system as mentioned above, by controlling the flow direction and on-off of the respective valves, realizes the guidance of the flow paths between the outdoor unit, the first type indoor unit and the second type indoor unit, so that the multi-temperature air conditioning system can realize the cooling and heating control for the first type indoor unit and the second type indoor unit in different zones.

Of course, the multi-temperature air conditioning system can also achieve the whole zone cooling mode, the whole zone heating mode, the specific zone cooling mode, and the specific zone heating mode. An exemplary description will be given below in conjunction with FIG. 1.

With continued reference to FIG. 1, specifically, when the whole zone cooling mode is executed, that is, when cooling is performed for both the first type indoor unit and the second type indoor unit, the first regulating valve 123, the second regulating valve 133, and the first stop valve 112 are turned on, while the second stop valve 124 and the third stop valve 134 are turned off, and the first throttling element 122 and the second throttling element 132 are allowed to play a throttling role.

At this point, the refrigerant first enters the compressor 111 for gas-phase compression. And then, the refrigerant flows from the exhaust port 111b of the compressor 111 through the first stop valve 112 into the outdoor heat exchanger 113 for condensation and heat dissipation. The first part of the refrigerant then flows through the first throttling element 122 for throttling expansion through the first check valve 114, and enters the first indoor heat exchanger 121 for evaporation and heat absorption, thereby providing cooling for the first type indoor unit. The refrigerant that has completed its work then returns to the suction port 111a of the compressor 111 after passing through the first regulating valve 123, thus completing the cycle.

Meanwhile, the refrigerant flows from the exhaust port 111b of the compressor 111 through the first stop valve 112 into the outdoor heat exchanger 113 for condensation and heat dissipation. The second part of the refrigerant then flows through the second throttling element 132 for throttling expansion through the first check valve 114, and enters the second indoor heat exchanger 131 for evaporation and heat absorption, thereby providing cooling for the second type indoor unit. The refrigerant that has completed its work then returns to the suction port 111a of the compressor 111 after passing through the second regulating valve 133, thus completing the cycle.

When the whole zone heating mode is executed, that is, when heating is performed for both the first type indoor unit and the second type indoor unit, the first regulating valve 123, the second regulating valve 133, the second stop valve 124, and the third stop valve 134 are turned on, while the first stop valve 112, the first throttling element 122, and the second throttling element 132 are turned off.

At this point, the refrigerant first enters the compressor 111 for gas-phase compression. And then, the first part of the refrigerant flows from the exhaust port 111b of the compressor 111 through the second stop valve 124 into the first indoor heat exchanger 121, thereby providing heating for the first type indoor unit. The refrigerant that has completed its work returns to the suction port 111a of the compressor 111 after passing through the first regulating valve 123, thus completing the cycle.

Meanwhile, the second part of the refrigerant flows from the exhaust port 111b of the compressor 111 through the third stop valve 134 into the second indoor heat exchanger 131, thereby providing heating for the second type indoor unit. The refrigerant that has completed its work returns to the suction port 111a of the compressor 111 after passing through the second regulating valve 133, thus completing the cycle.

When the specific zone cooling mode is executed, that is, when cooling is performed for a specific one of the first type indoor unit or the second type indoor unit, the compressor 111 is allowed to be connected with the outdoor heat exchanger 113, and the specific one of the first type indoor unit or the second type indoor unit is allowed to be connected with the compressor 111.

If the specific zone cooling mode is executed with the first type indoor unit as the target object, the first stop valve 112 and the first regulating valve 123 are turned on, while the second stop valve 124, the third stop valve 134, and the second regulating valve 133 are turned off, and the first throttling element 122 is allowed to play a throttling role, while the second throttling element 132 is turned off.

At this point, the refrigerant first enters the compressor 111 for gas-phase compression. And then, the refrigerant flows from the exhaust port 111b of the compressor 111 through the first stop valve 112 into the outdoor heat exchanger 113 for condensation and heat dissipation. The refrigerant then flows through the first throttling element 122 for throttling expansion through the first check valve 114, and enters the first indoor heat exchanger 121 for evaporation and heat absorption, thereby providing cooling for the first type indoor unit. The refrigerant that has completed its work then returns to the suction port 111a of the compressor 111 after passing through the first regulating valve 123, thus completing the cycle.

If the specific zone cooling mode is executed with the second type indoor unit as the target object, the first stop valve 112 and the second regulating valve 133 are turned on, while the second stop valve 124, the third stop valve 134 and the first regulating valve 123 are turned off, and the second throttling element 132 is allowed to play a throttling role, while the first throttling element 122 is turned off.

At this point, the refrigerant first enters the compressor 111 for gas-phase compression. And then, the refrigerant flows from the exhaust port 111b of the compressor 111 through the first stop valve 112 into the outdoor heat exchanger 113 for condensation and heat dissipation. The refrigerant then flows through the second throttling element 132 for throttling expansion through the first check valve 114, and enters the second indoor heat exchanger 131 for evaporation and heat absorption, thereby providing cooling for the second type indoor unit. The refrigerant that has completed its work then returns to the suction port 111a of the compressor 111 after passing through the second regulating valve 133, thus completing the cycle.

When the specific zone heating mode is executed, that is, when heating is performed on a specific one of the first type indoor unit or the second type indoor unit, the compressor 111 is allowed to be connected with a specific one of the first type indoor unit or the second type indoor unit.

If the specific zone heating mode is executed with the first type indoor unit as the target object, the second stop valve 124 and the first regulating valve 123 are turned on, while the first stop valve 112, the third stop valve 134, the second regulating valve 133, the first throttling element 122, and the second throttling element 132 are turned off.

At this point, the refrigerant first enters the compressor 111 for gas-phase compression. And then, the refrigerant flows from the exhaust port 111b of the compressor 111 through the second stop valve 124 into the first indoor heat exchanger 121, thereby providing heating for the first type indoor unit. The refrigerant that has completed its work returns to the suction port 111a of the compressor 111 after passing through the first regulating valve 123, thus completing the cycle.

If the specific zone heating mode is executed with the second type indoor unit as the target object, the third stop valve 134 and the second regulating valve 133 are turned on, while the first stop valve 112, the second stop valve 124, the first regulating valve 123, the first throttling element 122, and the second throttling element 132 are turned off.

At this point, the refrigerant first enters the compressor 111 for gas-phase compression. And then, the refrigerant flows from the exhaust port 111b of the compressor 111 through the third stop valve 134 into the second indoor heat exchanger 131, thereby providing heating for the second type indoor unit. The refrigerant that has completed its work returns to the suction port 111a of the compressor 111 after passing through the second regulating valve 133, thus completing the cycle.

FIG. 2 shows another embodiment of a multi-temperature air conditioning system. The multi-temperature air conditioning system 200 comprises an outdoor unit, a first type indoor unit, and a second type indoor unit. The functions and principles of the indoor and outdoor units in the embodiment shown in FIG. 2 can refer to the aforementioned embodiment, which will not be repeated here.

Specifically, a compressor 211, a first stop valve 212, an outdoor heat exchanger 213, and a first check valve 214 connected through pipelines are arranged in the outdoor unit. Wherein, the first stop valve 212 is arranged between the first end of the outdoor heat exchanger 213 and the exhaust port 211b of the compressor 211. The first type indoor unit is provided with a first indoor heat exchanger 221, a first throttling element 222 with a shut-off function, a first three-way valve 223, and a second stop valve 224, respectively, wherein the first three-way valve 223 has a first port 223a for connecting with the second end of the first indoor heat exchanger 221, a second port 223b for connecting with the suction port 211a of the compressor 211, and a third port 223c for connecting with the first check valve 214. The first end of the first indoor heat exchanger 221 is connected to the second end of the outdoor heat exchanger 213 through the first throttling element 222 and the first check valve 214, while the first end of the first indoor heat exchanger 221 is at the same time connected to the exhaust port 211b of the compressor 211 through the second stop valve 224. And, the second type indoor unit is provided with a second indoor heat exchanger 231, a second throttling element 232 with a shut-off function, a second three-way valve 233, and a third stop valve 234, respectively, wherein the second three-way valve 233 has a first port 233a for connecting with the second end of the second indoor heat exchanger 231, a second port 233b for connecting with the suction port 211a of the compressor 211, and a third port 233c for connecting with the first check valve 214. The first end of the second indoor heat exchanger 231 is connected to the second end of the outdoor heat exchanger 213 through the second throttling element 232 and the first check valve 214, while the first end of the second indoor heat exchanger 231 is connected to the exhaust port 211b of the compressor 211 through the third stop valve 234.

The multi-temperature air conditioning system under this arrangement, by arranging multiple types of valve devices between the outdoor unit, and the first type indoor unit and the second type indoor unit that are connected with the outdoor unit, achieves the interconnection between the three, making it possible to realize the cooling and heating control of the first type indoor unit and the second type indoor unit in different zones. Although a first type indoor unit and a second type indoor unit are illustrated as examples in the figures, it should be appreciated that they can refer to a kind of indoor units having component configuration with common characteristics. Therefore, the multi-temperature air conditioning system and the control method described below can be applied to the layout scheme having two or more indoor units.

Various possible modifications of the multi-temperature air conditioning system will be described below in conjunction with the accompanying drawings. In addition, in order to further improve system efficiency or reliability, some components can be additionally added, as also exemplified below. For example, the multi-temperature air conditioning system 200 further comprises a controller that communicates with the first three-way valve 223, the second three-way valve 233, the first stop valve 212, the second stop valve 224, the third stop valve 234, the first throttling element 222, the second throttling element 232, or any combination thereof.

The control method for the multi-temperature air conditioning system 200 will be described below in conjunction with FIG. 2.

When the multi-temperature air conditioning system executes the zoned cooling and heating mode, if the cooling mode is executed with the first type indoor unit as the target object, and the heating mode is executed with the second type indoor unit as the target object, the third stop valve 234, the first port 223a and the second port 223b of the first three-way valve 223, and the first port 233a and the third port 233c of the second three-way valve 233 are turned on, while the first stop valve 212, the second stop valve 224, the third port 223c of the first three-way valve 223, and the second port 233b of the second three-way valve 233 are turned off, and the second throttling element 232 is turned off while allowing the first throttling element 222 to play a throttling role.

At this point, the refrigerant first enters the compressor 211 for gas-phase compression. And then, the refrigerant flows from the exhaust port 211b of the compressor 211 through the third stop valve 234 into the second indoor heat exchanger 231 in the second type indoor unit, thereby providing heating for the second type indoor unit accordingly. The refrigerant then flows through the second three-way valve 233, passes through the first port 233a of the second three-way valve 233 and the third port 233c of the second three-way valve 233, and flows into the first indoor heat exchanger 221 in the first type indoor unit through the first throttling element 222, such that it enters the first indoor heat exchanger 221 for evaporation and heat absorption after undergoing throttling expansion in the first throttling element 222, thereby providing cooling for the first type indoor unit. The refrigerant that has completed its work returns to the suction port 211a of the compressor 211 after passing through the first port 223a of the first three-way valve 223 and the second port 223b of the first three-way valve 223, thus completing the cycle.

If the heating mode is executed with the first type indoor unit as the target object, and the cooling mode is executed with the second type indoor unit as the target object, the second stop valve 224, the first port 233a and the second port 233b of the second three-way valve 233, and the first port 223a and the third port 223c of the first three-way valve 223 are turned on, while the first stop valve 212, the third stop valve 234, the third port 233c of the second three-way valve 233 and the second port 223b of the first three-way valve 223 are turned off, and the first throttling element 222 is turned off while allowing the second throttling element 232 to play a throttling role.

At this point, the refrigerant first enters the compressor 211 for gas-phase compression. And then, the refrigerant flows from the exhaust port 211b of the compressor 211 through the second stop valve 224 into the first indoor heat exchanger 221 in the first type indoor unit, thereby providing heating for the first type indoor unit accordingly. The refrigerant then flows through the first three-way valve 223, passes through the first port 223a of the first three-way valve 223, the third port 223c of the first three-way valve 223, and flows into the second indoor heat exchanger 231 in the second type indoor unit through second throttling element 232, such that it enters the second indoor heat exchanger 231 for evaporation and heat absorption after undergoing throttling expansion in the second throttling element 232, thereby providing cooling for the second type indoor unit. The refrigerant that has completed its work returns to the suction port 211a of the compressor 211 after passing through the first port 233a of the second three-way valve 233 and the second port 233b of the second three-way valve 233, thus completing the cycle.

It should be appreciated that both the first throttling element 222 and the second throttling element 232 can play the role of throttling expansion. However, it is also possible that one of them can also be completely turned off, while the other can be adjusted by the opening to play the role of throttling expansion.

The control method for the multi-temperature air conditioning system as mentioned above, by controlling the flow direction and on-off of the respective valves, realizes the guidance of the flow paths between the outdoor unit, the first type indoor unit and the second type indoor unit, so that the multi-temperature air conditioning system can realize the cooling and heating control for the first type indoor unit and the second type indoor unit in different zones.

Of course, the multi-temperature air conditioning system can also achieve the whole zone cooling mode, the whole zone heating mode, the specific zone cooling mode, and the specific zone heating mode. An exemplary description will be given below in conjunction with FIG. 2.

With continued reference to FIG. 2, specifically, when the whole zone cooling mode is executed, that is, when cooling is performed for both the first type indoor unit and the second type indoor unit, the first stop valve 212, the first port 223a and the second port 223b of the first three-way valve 223, and the first port 233a and the second port 233b of the second three-way valve 233 are turned on, while the second stop valve 224, the third stop valve 234, the third port 223c of the first three-way valve 223 and the third port 233c of the second three-way valve 233 are turned off, and the first throttling element 222 and the second throttling element 232 are allowed to play a throttling role.

At this point, the refrigerant first enters the compressor 211 for gas-phase compression. And then, the first part of the refrigerant flows from the exhaust port 211b of the compressor 211 through the first stop valve 212 into the outdoor heat exchanger 213 for condensation and heat dissipation. The refrigerant then flows through the first check valve 214, where the first part of the refrigerant flows through the first throttling element 222 for throttling expansion, and enters the first indoor heat exchanger 221 for evaporation and heat absorption, thereby providing cooling for the first type indoor unit. The refrigerant that has completed its work then returns to the suction port 211a of the compressor 211 after passing through the first port 223a of the first three-way valve 223 and the second port 223b of the first three-way valve 223, thus completing the cycle.

Meanwhile, the refrigerant flows from the exhaust port 211b of the compressor 211 through the first stop valve 212 into the outdoor heat exchanger 213 for condensation and heat dissipation. The refrigerant then flows through the first check valve 214, where the second part of the refrigerant flows through the second throttling element 232 for throttling expansion, and enters the second indoor heat exchanger 231 for evaporation and heat absorption, thereby providing cooling for the second type indoor unit. The refrigerant that has completed its work then returns to the suction port 211a of the compressor 211 after passing through the first port 233a of the second three-way valve 233 and the second port 233b of the second three-way valve 233, thus completing the cycle.

When the whole zone heating mode is executed, that is, when heating is performed for both the first type indoor unit and the second type indoor unit, the second stop valve 224, the third stop valve 234, the first port 223a and the second port 223b of the first three-way valve 223, and the first port 233a and the second port 233b of the second three-way valve 233 are turned on, while the first stop valve 212, the third port 223c of the first three-way valve 223, the third port 233c of the second three-way valve 233, the first throttling element 222 and the second throttling element 232 are turned off.

At this point, the refrigerant first enters the compressor 211 for gas-phase compression. And then, the first part of the refrigerant flows from the exhaust port 211b of the compressor 211 through the second stop valve 224 into the first indoor heat exchanger 221, thereby providing heating for the first type indoor unit. The refrigerant that has completed its work returns to the suction port 211a of the compressor 211 after passing through the first port 223a of the first three-way valve 223 and the second port 223b of the first three-way valve 223, thus completing the cycle.

Meanwhile, the second part of the refrigerant flows from the exhaust port 211b of the compressor 211 through the third stop valve 234 into the second indoor heat exchanger 231, thereby providing heating for the second type indoor unit. The refrigerant that has completed its work returns to the suction port 211a of the compressor 211 after passing through the first port 233a of the second three-way valve 233 and the second port 233b of the second three-way valve 233, thus completing the cycle.

When the specific zone cooling mode is executed, that is, when cooling is performed for a specific one of the first type indoor unit or the second type indoor unit, the compressor 211 is allowed to be connected with the outdoor heat exchanger 213, and the specific one of the first type indoor unit or the second type indoor unit is allowed to be connected with the compressor 211.

If the specific zone cooling mode is executed with the first type indoor unit as the target object, the first stop valve 212, the first port 223a and the second port 223b of the first three-way valve 223, and the first port 233a and the second port 233b of the second three-way valve 233 are turned on, while the second stop valve 224, the third stop valve 234, the third port 223c of the first three-way valve 223, and the third port 233c of the second three-way valve 233 are turned off, and the first throttling element 222 is allowed to play a throttling role, while the second throttling element 232 is turned off.

At this point, the refrigerant first enters the compressor 211 for gas-phase compression. And then, the refrigerant flows from the exhaust port 211b of the compressor 211 through the first stop valve 212 into the outdoor heat exchanger 213 for condensation and heat dissipation. The refrigerant then flows through the first throttling element 222 for throttling expansion through the first check valve 214, and enters the first indoor heat exchanger 221 for evaporation and heat absorption, thereby providing cooling for the first type indoor unit. The refrigerant that has completed its work then returns to the suction port 211a of the compressor 211 after passing through the first port 223a of the first three-way valve 223 and the second port 223b of the first three-way valve 223, thus completing the cycle.

If the specific zone cooling mode is executed with the second type indoor unit as the target object, the first stop valve 212, the first port 233a and the second port 233b of the second three-way valve 233, and the first port 223a and the second port 223b of the first three-way valve 223 are turned on, while the second stop valve 224, the third stop valve 234, the third port 233c of the second three-way valve 233, and the third port 223c of the first three-way valve 223 are turned off, and the second throttling element 232 is allowed to play a throttling role, while the first throttling element 222 is turned off.

At this point, the refrigerant first enters the compressor 211 for gas-phase compression. And then, the refrigerant flows from the exhaust port 211b of the compressor 211 through the first stop valve 212 into the outdoor heat exchanger 213 for condensation and heat dissipation. The refrigerant then flows through the second throttling element 232 for throttling expansion through the first check valve 214, and enters the second indoor heat exchanger 231 for evaporation and heat absorption, thereby providing cooling for the second type indoor unit. The refrigerant that has completed its work then returns to the suction port 211a of the compressor 211 after passing through the first port 233a of the second three-way valve 233 and the second port 233b of the second three-way valve 233, thus completing the cycle

When the specific zone heating mode is executed, that is, when heating is performed on a specific one of the first type indoor unit or the second type indoor unit, the compressor 211 is allowed to be connected with a specific one of the first type indoor unit or the second type indoor unit.

If the specific zone heating mode is executed with the first type indoor unit as the target object, the second stop valve 224, the first port 223a and the second port 223b of the first three-way valve 223, and the first port 233a and the third port 233c of the second three-way valve 233 are turned on, while the first stop valve 212, the third stop valve 234, the third port 223c of the first three-way valve 223, the second port 233b of the second three-way valve 233, the first throttling element 222 and the second throttling element 232 are turned off.

At this point, the refrigerant first enters the compressor 211 for gas-phase compression. And then, the refrigerant flows from the exhaust port 211b of the compressor 211 through the second stop valve 224 into the first indoor heat exchanger 221, thereby providing heating for the first type indoor unit. The refrigerant that has completed its work returns to the suction port 211a of the compressor 211 after passing through the first port 223a and the second port 223b of the first three-way valve 223, thus completing the cycle.

If the specific zone heating mode is executed with the second type indoor unit as the target object, the third stop valve 234, the first port 233a and the second port 233b of the second three-way valve 233, and the first port 223a and the third port 223c of the first three-way valve 223 are turned on, while the first stop valve 212, the second stop valve 224, the third port 233c of the second three-way valve 233, the second port 223b of the first three-way valve 223, the first throttling element 222, and the second throttling element 232 are turned off.

At this point, the refrigerant first enters the compressor 211 for gas-phase compression. And then, the refrigerant flows from the exhaust port 211b of the compressor 211 through the third stop valve 234 into the second indoor heat exchanger 231, thereby providing heating for the second type indoor unit. The refrigerant that has completed its work returns to the suction port 211a of compressor 211 after passing through the first port 233a and the second port 233b of the second three-way valve 233, thereby completing the cycle.

It should be appreciated that although the embodiments of the control method for the multi-temperature air conditioning system is described in a certain order, these steps are not necessarily performed in the order described. Unless explicitly stated herein, there is no strict restriction in terms of the order of carrying out these steps. Instead, these steps can be carried out in other order. In addition, at least one part of the steps of the method may include multiple sub-steps or stages, which may not necessarily be executed at the same time but may be executed at different times, and may not necessarily be executed sequentially but may be executed in turn or alternately with other steps or sub-steps of other steps or at least one part of the stages.

In addition, although not shown in the figure, an embodiment of a transport refrigeration vehicle is further provided here. The transport refrigeration vehicle comprises the multi-temperature air conditioning system in any of the aforementioned embodiments or combinations thereof, so it also has its technical effect accordingly, which will not be repeated here. Furthermore, the transport refrigeration vehicle also comprises a plurality of compartment zones independent of each other; and the first type indoor unit or the second type indoor unit can be arranged alternatively in each compartment zone. The transport refrigeration vehicles under this arrangement can realize independent temperature control of the respective compartment zones, and can execute the cooling and heating modes respectively, thus improving the application scope of such transport refrigeration vehicles.

The above examples mainly illustrate a multi-temperature air conditioning system, a control method thereof and a transport refrigeration vehicle according to the present invention. Although only some of the embodiments of the present invention are described, those skilled in the art should understand that the present invention can, without departing from the scope of the present invention, be implemented in many other forms. Therefore, the illustrated examples and embodiments are to be considered as illustrative but not restrictive, and the present invention may cover various modifications or replacements if not departed from the scope of the present invention as defined by the appended claims.

## Claims

1. A multi-temperature air conditioning system (100), comprising:
an outdoor unit, in which a compressor (111), a first stop valve (112), an outdoor heat exchanger (113), and a first check valve (114) connected through pipelines are arranged, wherein, the first stop valve is arranged between a first end of the outdoor heat exchanger and an exhaust port (111b) of the compressor;
a first type indoor unit, in which a first indoor heat exchanger (121), a first throttling element (122) with a shut-off function, a first regulating valve (123), a second stop valve (124), and a second check valve (125) are respectively arranged, wherein, a first end of the first indoor heat exchanger (121) is connected to a second end of the outdoor heat exchanger (113) through the first throttling element (122) and the first check valve (114), while the first end of the first indoor heat exchanger is at the same time connected to the exhaust port (11 1b) of the compressor (111) through the second stop valve (124), and a second end of the first indoor heat exchanger is connected to a suction port (111a) of the compressor through the first regulating valve (123), while the second end of the first indoor heat exchanger is at the same time connected to the second end of the outdoor heat exchanger through the second check valve and the first check valve; and
a second type indoor unit, in which a second indoor heat exchanger (131), a second throttling element (132) with a shut-off function, a second regulating valve (133), a third stop valve (134), and a third check valve (135) are respectively arranged, wherein, a first end of the second indoor heat exchanger is connected to the second end of the outdoor heat exchanger (113) through the second throttling element (132) and the first check valve (114), while the first end of the second indoor heat exchanger is at the same time connected to the exhaust port (111b) of the compressor (111) through the third stop valve (134), and a second end of the second indoor heat exchanger is connected to the suction port (111a) of the compressor through the second regulating valve (133), while the second end of the second indoor heat exchanger is at the same time connected to the second end of the outdoor heat exchanger through the third check valve and the first check valve.

2. The multi-temperature air conditioning system (100) according to claim 1, wherein the first regulating valve and the second regulating valve are continuously-adjustable regulating valves.

3. The multi-temperature air conditioning system (100) according to claim 2, comprising a controller that communicates with the first regulating valve (123), the second regulating valve (133), the first stop valve (112), the second stop valve (124), the third stop valve (134), the first throttling element (122), the second throttling element (132), or any combination thereof.

4. A control method for the multi-temperature air conditioning system (100) according to any of claims 1-3, comprising:
a zoned cooling and heating mode of turning on the third stop valve and the first regulating valve, turning off the second regulating valve, the first stop valve and the second stop valve, and turning off the second throttling element while allowing the first throttling element to play a throttling role, so that refrigerant flows sequentially through the exhaust port of the compressor, the third stop valve, the second indoor heat exchanger, the third check valve, the first throttling element, the first indoor heat exchanger, the first regulating valve, and the suction port of the compressor; or
turning on the second stop valve and the second regulating valve, turning off the first regulating valve, the first stop valve, and the third stop valve, and turning off the first throttling element while allowing the second throttling element to play a throttling role, so that the refrigerant flows sequentially through the exhaust port of the compressor, the second stop valve, the first indoor heat exchanger, the second check valve, the second throttling element, the second indoor heat exchanger, the second regulating valve, and the suction port of the compressor.

5. The control method according to claim 4, comprising: a whole zone cooling mode of turning on the first regulating valve, the second regulating valve, and the first stop valve, turning off the second stop valve and the third stop valve, and allowing the first throttling element and the second throttling element to play a throttling role, so that a first part of refrigerant flows sequentially through the exhaust port of the compressor, the first stop valve, the outdoor heat exchanger, the first check valve, the first throttling element, the first indoor heat exchanger, the first regulating valve, and the suction port of the compressor, while a second part of the refrigerant flows sequentially through the exhaust port of the compressor, the first stop valve, the outdoor heat exchanger, the first check valve, the second throttling element, the second indoor heat exchanger, the second regulating valve, and the suction port of the compressor.

6. The control method according to claim 4, comprising: a whole zone heating mode of turning on the first regulating valve, the second regulating valve, the second stop valve, and the third stop valve, turning off the first stop valve, the first throttling element, and the second throttling element, and allowing the first part of the refrigerant to flow sequentially through the exhaust port of the compressor, the second stop valve, the first indoor heat exchanger, the first regulating valve, and the suction port of the compressor, while allowing the second part of the refrigerant to flow sequentially through the exhaust port of the compressor, the third stop valve, the second indoor heat exchanger, the second regulating valve, and the suction port of the compressor.

7. The control method according to claim 4, comprising: a specific zone cooling mode of turning on the first stop valve and the first regulating valve, turning off the second stop valve, the third stop valve, and the second regulating valve, and allowing the first throttling element to play a throttling role while turning off the second throttling element, so that the refrigerant flows sequentially through the exhaust port of the compressor, the first stop valve, the outdoor heat exchanger, the first check valve, the first throttling element, the first indoor heat exchanger, the first regulating valve, and the suction port of the compressor; or
turning on the first stop valve and the second regulating valve, turning off the second stop valve, the third stop valve, and the first regulating valve, and allowing the second throttling element to play a throttling role while turning off the first throttling element, so that the refrigerant flows sequentially through the exhaust port of the compressor, the first stop valve, the outdoor heat exchanger, the first check valve, the second throttling element, the second indoor heat exchanger, the second regulating valve, and the suction port of the compressor.

8. The control method according to claim 4, comprising: a specific zone heating mode of turning on the second stop valve and the first regulating valve, turning off the first stop valve, the third stop valve, the second regulating valve, the first throttling element and the second throttling element, so that the refrigerant flows sequentially through the exhaust port of the compressor, the second stop valve, the first indoor heat exchanger, the first regulating valve, and the suction port of the compressor; or
turning on the third stop valve and the second regulating valve, turning off the first stop valve, the second stop valve, the first regulating valve, the first throttling element, and the second throttling element, so that the refrigerant flows sequentially through the exhaust port of the compressor, the third stop valve, the second indoor heat exchanger, the second regulating valve, and the suction port of the compressor.

9. A multi-temperature air conditioning system (200), comprising:
an outdoor unit, in which a compressor (211), a first stop valve (212), an outdoor heat exchanger (213), and a first check valve (214) connected through pipelines are arranged, wherein, the first stop valve is arranged between a first end of the outdoor heat exchanger and an exhaust port (211b) of the compressor (211);
a first type indoor unit, in which a first indoor heat exchanger (221), a first throttling element (222) with a shut-off function, a first three-way valve (223), and a second stop valve (224) are respectively arranged, wherein, the first three-way valve has a first port (223a) for connecting with a second end of the first indoor heat exchanger (221), a second port (223b) for connecting with a suction port (211a) of the compressor (211), and a third port (223c) for connecting with the first check valve (214), where a first end of the first indoor heat exchanger (221) is connected to a second end of the outdoor heat exchanger (213) through the first throttling element (222) and the first check valve (214), while the first end of the first indoor heat exchanger is at the same time connected to the exhaust port (2 11b) of the compressor (211) through the second stop valve (224); and
a second type indoor unit, in which a second indoor heat exchanger (231), a second throttling element (232) with a shut-off function, a second three-way valve (233), and a third stop valve (234) are respectively arranged, wherein, the second three-way valve has a first port (233a) for connecting with a second end of the second indoor heat exchanger (231), a second port (233b) for connecting with the suction port (211a) of the compressor (211), and a third port (233c) for connecting with the first check valve (214), where a first end of the second indoor heat exchanger (231) is connected to the second end of the outdoor heat exchanger (213) through the second throttling element (232) and the first check valve (214), while the first end of the second indoor heat exchanger (231) is at the same time connected to the exhaust port (211b) of the compressor (211) through the third stop valve (234).

10. The multi-temperature air conditioning system (200) according to claim 9, comprising a controller that communicates with the first three-way valve (223), the second three-way valve (233), the first stop valve (212), the second stop valve (224), the third stop valve (234), the first throttling element (222), the second throttling element (232), or any combination thereof.

11. A control method for the multi-temperature air conditioning system (200) according to claims 9 or 10, comprising:
a zoned cooling and heating mode of turning on the third stop valve, first and second ports of the first three-way valve, and first and third ports of the second three-way valve, turning off the first stop valve, the second stop valve, a third port of the first three-way valve and a second port of the second three-way valve, and turning off the second throttling element while allowing the first throttling element to play a throttling role, so that refrigerant flows sequentially through the exhaust port of the compressor, the third stop valve, the second indoor heat exchanger, the first port of the second three-way valve, the third port of the second three-way valve, the first throttling element, the first indoor heat exchanger, the first port of the first three-way valve, the second port of the first three-way valve, and the suction port of the compressor; or
turning on the second stop valve, first and second ports of the second three-way valve, and first and third ports of the first three-way valve, turning off the first stop valve, the third stop valve, the third port of the second three-way valve, and the second port of the first three-way valve, and turning off the first throttling element while allowing the second throttling element to play a throttling role, so that the refrigerant flows sequentially through the exhaust port of the compressor, the second stop valve, the first indoor heat exchanger, the first port of the first three-way valve, the third port of the first three-way valve, the second throttling element, the second indoor heat exchanger, the first port of the second three-way valve, the second port of the second three-way valve, and the suction port of the compressor.

12. The control method according to claim 11, comprising:
a whole zone cooling mode of turning on the first stop valve, first and second ports of the first three-way valve, and first and second ports of the second three-way valve, turning off the second stop valve, the third stop valve, a third port of the first three-way valve and a third port of the second three-way valve, and allowing the first throttling element and the second throttling element to play a throttling role, so that a first part of refrigerant flows sequentially through the exhaust port of the compressor, the first stop valve, the outdoor heat exchanger, the first check valve, the first throttling element, the first indoor heat exchanger, the first port of the first three-way valve, the second port of the first three-way valve, and the suction port of the compressor, while a second part of the refrigerant flows sequentially through the exhaust port of the compressor, the first stop valve, the outdoor heat exchanger, the first check valve, the second throttling element, the second indoor heat exchanger, the first port of the second three-way valve, the second port of the second three-way valve, and the suction port of the compressor; or
a whole zone heating mode of turning on the second stop valve, the third stop valve, first and second ports of the first three-way valve, and first and second ports of the second three-way valve, turning off the first stop valve, the third port of the first three-way valve, the third port of the second three-way valve, the first throttling element, and the second throttling element, so that the first part of the refrigerant flows sequentially through the exhaust port of the compressor, the second stop valve, the first indoor heat exchanger, the first port of the first three-way valve, the second port of the first three-way valve, and the suction port of the compressor, while the second part of the refrigerant flows sequentially through the exhaust port of the compressor, the third stop valve, the second indoor heat exchanger, the first port of the second three-way valve, the second port of the second three-way valve, and the suction port of the compressor.

13. The control method according to claim 11, comprising:
a specific zone cooling mode of turning on the first stop valve, the first and second ports of the first three-way valve, and the first and second ports of the second three-way valve, turning off the second stop valve, the third stop valve, the third port of the first three-way valve, and the third port of the second three-way valve, and allowing the first throttling element to play a throttling role while turning off the second throttling element, so that the refrigerant flows sequentially through the exhaust port of the compressor, the first stop valve, the outdoor heat exchanger, the first check valve, the first throttling element, the first indoor heat exchanger, the first port of the first three-way valve, the second port of the first three-way valve, and the suction port of the compressor; or
turning on the first stop valve, the first and second ports of the second three-way valve, and the first and second ports of the first three-way valve, turning off the second stop valve, the third stop valve, the third port of the second three-way valve, and the third port of the first three-way valve, and allowing the second throttling element to play a throttling role while turning off the first throttling element, so that the refrigerant flows sequentially through the exhaust port of the compressor, the first stop valve, the outdoor heat exchanger, the first check valve, the second throttling element, the second indoor heat exchanger, the first port of the second three-way valve, the second port of the second three-way valve, and the suction port of the compressor.

14. The control method according to claim 11, comprising:
a specific zone heating mode of turning on the second stop valve, the first and second ports of the first three-way valve, and the first and third ports of the second three-way valve, turning off the first stop valve, the third stop valve, the third port of the first three-way valve, the second port of the second three-way valve, the first throttling element, and the second throttling element, so that the refrigerant flows sequentially through the exhaust port of the compressor, the second stop valve, the first indoor heat exchanger, the first port of the first three-way valve, the second port of the first three-way valve, and the suction port of the compressor; or
turning on the third stop valve, the first and second ports of the second three-way valve, and the first and third ports of the first three-way valve, turning off the first stop valve, the second stop valve, the third port of the second three-way valve, the second port of the first three-way valve, the first throttling element, and the second throttling element, so that the refrigerant flows sequentially through the exhaust port of the compressor, the third stop valve, the second indoor heat exchanger, the first port of the second three-way valve, the second port of the second three-way valve, and the suction port of the compressor.

15. A transport refrigeration vehicle, comprising: the multi-temperature air conditioning system (100; 200) according to any of claims 1-3, 9 and 10; a plurality of compartment zones independent of each other; wherein the first type indoor unit or the second type indoor unit is arranged alternatively in each compartment zone.
